# FASCICULE DE BREVET EUROPEEN

(11) **EP 2 327 825 B1**
(45) Date de publication et mention de la délivrance du brevet: **14.11.2012**
(21) Numéro de dépôt: 10192553.5
(22) Date de dépôt: 25.11.2010
(51) Int. Cl.: D06F 39/00, A47L 15/42

(54) **Procédé de commande en fonctionnement d'un appareil de lavage et appareil de lavage associé**
Steuerungsverfahren für den Betrieb eines Reinigungsgeräts, und entsprechendes Reinigungsgerät
Method for controlling the operation of a washing appliance and associated washing appliance

(30) Priorité: 27.11.2009 FR 0905733
(43) Date de publication de la demande: 01.06.2011
(73) Titulaire: FagorBrandt SAS, 92500 Rueil Malmaison (FR)
(72) Inventeur: Pont, Hervé, 71680 Vinzelles (FR)

(56) Documents cités:
- WO-A1-2007/004176
- WO-A1-2009/141218
- DE-A1- 4 403 737

## Description

La présente invention concerne d'une part un procédé de commande en fonctionnement d'un appareil de lavage pourvu d'un échangeur de chaleur permettant de récupérer, de stocker et de restituer de l'énergie calorifique d'un ou plusieurs bains de lavage et/ou de rinçage contenus dans une cuve de lavage.

Elle concerne également un appareil de lavage pourvu d'un échangeur de chaleur permettant de récupérer, de stocker et de restituer de l'énergie calorifique d'un ou plusieurs bains de lavage et/ou de rinçage contenus dans une cuve de lavage.

De manière générale, l'invention concerne les appareils de lavage, particulièrement les appareils de lavage à usage domestique, comprenant au moins une réserve de matériau à accumulation de chaleur mise en contact avec au moins un bain de lavage et/ou de rinçage, tels que connus de WO-2007/004176 A1.

On connaît un document EP 1 111 118 A2 qui décrit un appareil ménager véhiculant de l'eau comprenant au moins une conduite d'eaux usées pour l'arrivée des eaux usées évacuées d'une cuve de nettoyage à l'aide d'une pompe et une conduite d'eau douce pour l'arrivée de l'eau douce destinée à alimenter la cuve de nettoyage. L'appareil ménager comprend également un accumulateur de chaleur latente pour absorber l'énergie thermique dans les eaux usées, pour emmagasiner l'énergie thermique absorbée ainsi que pour fournir l'énergie thermique à l'eau douce. L'accumulateur de chaleur latente est intégré dans la conduite d'eau douce. L'accumulateur de chaleur latente est agencé de manière à produire à la fois un écoulement à courant parallèle et un écoulement à contre-courant de l'eau douce par rapport au sens d'écoulement des eaux usées afin d'obtenir une augmentation de l'énergie thermique transmissible.

Cependant, cet appareil ménager présente l'inconvénient de disposer d'une surface d'échange de chaleur limitée entre l'accumulateur de chaleur latente, la conduite des eaux usées, et la conduite d'eau douce.

Par conséquent, l'énergie thermique échangée entre les eaux usées, l'accumulateur de chaleur latente et l'eau douce n'est pas optimisée et nécessite une durée d'échange de chaleur importante.

Un tel accumulateur à chaleur latente ne permet pas d'optimiser les échanges de chaleur à cause de l'épaisseur des éléments constituant celui-ci et de la surface réduite de la paroi d'échange.

Par ailleurs, la mise en oeuvre d'un tel appareil ménager est complexe compte tenu des multiples étanchéités à réaliser au niveau des zones d'échange de chaleur entre l'accumulateur de chaleur latente et les conduites d'eaux usées et d'eau douce.

Cet appareil ménager présente également l'inconvénient que l'accumulateur à chaleur latente est constitué d'éléments ayant des formes sinueuses provoquant l'accumulation de saletés à l'intérieur de celui-ci lors de la circulation des eaux usées.

En outre, la durée d'échange de chaleur dans l'accumulateur à chaleur latente est limitée à la durée de circulation à contre-courant de l'eau douce et des eaux usées entrant et sortant dudit accumulateur de chaleur latente.

Les formes des éléments constituant l'accumulateur à chaleur latente sont complexes engendrant un coût élevé de fabrication de l'appareil ménager et des difficultés d'industrialisation.

La présente invention a pour but de résoudre les inconvénients précités et de proposer un procédé de commande en fonctionnement d'un appareil de lavage et un appareil de lavage associé permettant d'absorber l'énergie calorifique d'au moins un bain de lavage et/ou de rinçage, de stocker ladite énergie calorifique absorbée et de restituer ladite énergie calorifique stockée à au moins un bain de lavage et/ou de rinçage avec un échange de chaleur entre deux bains de lavage et/ou de rinçage pendant des phases d'échange de chaleur tout en simplifiant la mise en oeuvre industrielle dudit appareil de lavage.

A cet égard, la présente invention vise, selon un premier aspect, un procédé de commande en fonctionnement d'un appareil de lavage, ledit appareil de lavage comprenant une cuve de lavage, un échangeur de chaleur, ladite cuve de lavage contenant au moins un bain de lavage et/ou de rinçage utilisé lors d'un cycle de fonctionnement dudit appareil de lavage, ledit échangeur de chaleur comprenant au moins une réserve d'un matériau à accumulation de chaleur captant l'énergie calorifique d'au moins un premier bain de lavage et/ou de rinçage et restituant ladite énergie calorifique captée à au moins un deuxième bain de lavage et/ou de rinçage.

Selon l'invention, le procédé de commande en fonctionnement d'un appareil de lavage comprend au moins les étapes suivantes :
- introduction et stockage dudit au moins un premier bain de lavage et/ou de rinçage dans un réservoir, où ledit réservoir est en communication fluidique avec ladite cuve de lavage et comporte ladite au moins une réserve d'un matériau à accumulation de chaleur ;
- récupération de l'énergie calorifique dudit au moins un premier bain de lavage et/ou de rinçage par ladite au moins une réserve d'un matériau à accumulation de chaleur et stockage de ladite énergie calorifique par ladite au moins une réserve d'un matériau à accumulation de chaleur ;
- évacuation dudit au moins un premier bain de lavage et/ou de rinçage depuis ledit réservoir ;
- introduction et stockage dudit au moins un deuxième bain de lavage et/ou de rinçage dans ledit réservoir ;
- restitution de ladite énergie calorifique captée par ladite au moins une réserve d'un matériau à accumulation de chaleur audit au moins un deuxième bain de lavage et/ou de rinçage ; et
- évacuation dudit au moins un deuxième bain de lavage et/ou de rinçage depuis ledit réservoir vers ladite cuve de lavage.

Ainsi, au moins un premier bain de lavage et/ou de rinçage est introduit depuis la cuve de lavage dans le réservoir comportant au moins une réserve d'un matériau à accumulation de chaleur et stocké dans ledit réservoir pour récupérer l'énergie calorifique dudit au moins un premier bain de lavage et/ou de rinçage. Et au moins un deuxième bain de lavage et/ou de rinçage est introduit depuis la cuve de lavage dans le réservoir comportant au moins une réserve d'un matériau à accumulation de chaleur et stocké dans ledit réservoir pour restituer l'énergie calorifique captée audit au moins un deuxième bain de lavage et/ou de rinçage suite à l'évacuation dudit au moins un premier bain de lavage et/ou de rinçage depuis ledit réservoir.

Lesdits au moins un premier et deuxième bain de lavage et/ou de rinçage introduits et stockés successivement dans le réservoir échangent de la chaleur avec ladite au moins une réserve d'un matériau à accumulation de chaleur logée à l'intérieur dudit réservoir de sorte que ledit matériau à accumulation de chaleur absorbe l'énergie calorifique dudit au moins un premier bain de lavage et/ou de rinçage et que ledit matériau à accumulation de chaleur restitue l'énergie calorifique captée audit au moins un deuxième bain de lavage et/ou de rinçage.

Selon un second aspect, la présente invention vise un appareil de lavage comprenant une cuve de lavage, un échangeur de chaleur, ladite cuve de lavage contenant au moins un bain de lavage et/ou de rinçage utilisé lors d'un cycle de fonctionnement dudit appareil de lavage, ledit échangeur de chaleur comprenant au moins une réserve d'un matériau à accumulation de chaleur captant l'énergie calorifique d'au moins un premier bain de lavage et/ou de rinçage et restituant ladite énergie calorifique captée à au moins un deuxième bain de lavage et/ou de rinçage.

Selon l'invention,
- ledit appareil de lavage comprend :
   o un réservoir en communication fluidique avec ladite cuve de lavage ;
   o au moins un moyen de mise en circulation desdits au moins un premier et deuxième bain de lavage et/ou de rinçage entre ladite cuve de lavage et ledit réservoir,
   o où ledit au moins un moyen de mise en circulation introduit successivement lesdits au moins un premier et deuxième bain de lavage et/ou de rinçage dans ledit réservoir, et
   o où ledit au moins un moyen de mise en circulation évacue successivement ledit au moins un premier bain de lavage et/ou de rinçage depuis ledit réservoir et ledit au moins un deuxième bain de lavage et/ou de rinçage depuis ledit réservoir vers ladite cuve de lavage ;
- ledit réservoir comporte :
   o ladite au moins une réserve d'un matériau à accumulation de chaleur,
   o où lesdits au moins un premier et deuxième bain de lavage et/ou de rinçage sont stockés successivement à l'intérieur dudit réservoir lors des échanges de chaleur entre lesdits au moins un premier et deuxième bain de lavage et/ou de rinçage et ladite au moins une réserve d'un matériau à accumulation de chaleur, et
   o où ladite au moins une réserve d'un matériau à accumulation de chaleur stocke l'énergie calorifique dudit au moins un premier bain de lavage et/ou de rinçage et restitue ladite énergie calorifique captée audit au moins un deuxième bain de lavage et/ou de rinçage.

Cet appareil de lavage présente des avantages analogues à ceux décrits précédemment en référence au procédé de commande en fonctionnement d'un appareil de lavage selon l'invention.

En particulier, la cuve de lavage et le réservoir comportant au moins une réserve d'un matériau à accumulation de chaleur sont couplés de manière fluidique de sorte que lesdits au moins un premier et deuxième bain de lavage et/ou de rinçage puissent circuler depuis ladite cuve de lavage vers ledit réservoir puis dudit réservoir vers soit la cuve de lavage soit un réseau d'eau usée.

Le réservoir est adapté à contenir au moins en partie un bain de lavage et/ou de rinçage de sorte à créer un échangeur de chaleur entre ladite au moins une réserve d'un matériau à accumulation de chaleur et l'un desdits au moins un premier et deuxième bain de lavage et/ou de rinçage provenant de la cuve de lavage.

Ladite au moins une réserve d'un matériau à accumulation de chaleur est adaptée à stocker l'énergie calorifique captée d'au moins un premier bain de lavage et/ou de rinçage avant de restituer cette énergie calorifique à un deuxième bain de lavage et/ou de rinçage.

Le réservoir comportant au moins une réserve d'un matériau à accumulation de chaleur peut ainsi recevoir successivement ledit au moins un premier bain de lavage et/ou de rinçage pour l'absorption d'énergie calorifique par le matériau à accumulation de chaleur et ledit au moins un deuxième bain de lavage et/ou de rinçage pour la restitution d'énergie calorifique absorbée par ledit matériau à accumulation de chaleur.

De cette manière, les phases d'échange de chaleur entre le matériau à accumulation de chaleur et lesdits au moins un premier et deuxième bain de lavage et/ou de rinçage sont raccourcies et d'efficacité améliorée tout en simplifiant la structure de l'appareil de lavage et l'industrialisation de celui-ci.

Lors du remplissage du réservoir logeant ladite au moins une réserve d'un matériau à accumulation de chaleur par lesdits au moins un premier et deuxième bain de lavage et/ou de rinçage, ladite au moins une réserve d'un matériau à accumulation de chaleur est en contact permanent avec lesdits au moins un premier et deuxième bain de lavage et/ou de rinçage.

Ainsi, les échanges de chaleur entre le matériau à accumulation de chaleur de ladite au moins une réserve et lesdits au moins un premier et deuxième bain de lavage et/ou de rinçage sont optimisés grâce à une surface d'échange de chaleur maximale.

D'autres particularités et avantages de l'invention apparaîtront encore dans la description ci-après.

Aux dessins annexés, donnés à titre d'exemples non limitatifs :
- la figure 1 est une vue schématique en coupe d'une machine à laver le linge conforme à un premier mode de réalisation de l'invention ;
- la figure 2 est une vue schématique en coupe d'une machine à laver le linge conforme à un deuxième mode de réalisation de l'invention ;
- la figure 3 est une vue schématique en coupe d'une machine à laver le linge conforme à un troisième mode de réalisation de l'invention ;
- la figure 4 est une vue schématique en coupe d'une machine à laver le linge conforme à un quatrième mode de réalisation de l'invention ; et
- la figure 5 est une vue schématique en coupe d'une machine à laver le linge conforme à un cinquième mode de réalisation de l'invention.

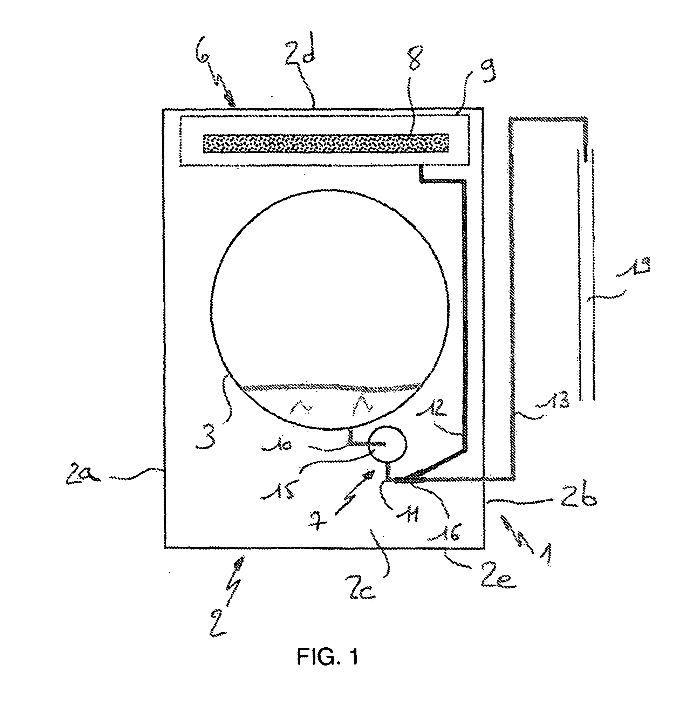

On va décrire tout d'abord en référence aux figures 1 à 5 un appareil de lavage.

Cet appareil de lavage peut être une machine à laver le linge à usage domestique, ou une machine à laver et à sécher le linge à usage domestique, ou une machine à laver la vaisselle à usage domestique.

Bien entendu, la présente invention s'applique à tous les types d'appareil de lavage, et notamment à chargement frontal et à chargement par le dessus du linge ou de la vaisselle.

On va décrire, en référence aux figures 1 à 5, une machine à laver le linge à chargement du linge par le dessus conforme à l'invention.

Une machine à laver le linge 1 comprend une carrosserie 2. La carrosserie 2 de la machine à laver le linge 1 comprend une paroi avant 2a, une paroi arrière 2b, deux parois latérales 2c, une paroi de dessus 2d et une paroi inférieure 2e.

De manière classique, une telle machine à laver le linge 1 comprend une carrosserie 2 adaptée à loger une cuve de lavage 3 dans laquelle peut être monté en rotation un tambour (non représenté) destiné à contenir le linge.

La carrosserie 2 comporte une ouverture supérieure permettant d'introduire et de retirer le linge dans le tambour.

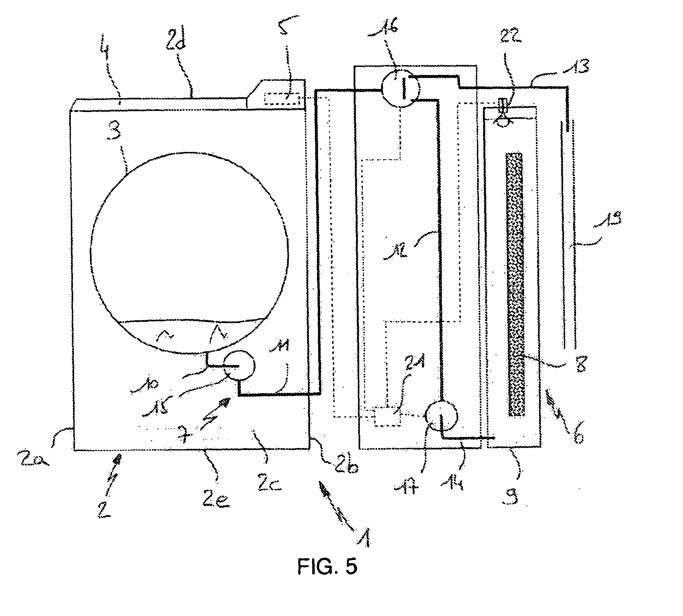

Cette ouverture d'accès peut être obturée lors du fonctionnement de la machine 1 par une porte 4 montée pivotante sur la carrosserie 2 de la machine 1, telle qu'illustrée à la figure 5.

L'eau d'au moins un bain de lavage et/ou de rinçage contenue dans la cuve de lavage 3 peut être chauffée par un moyen de chauffage (non représenté), tel que par exemple une résistance chauffante électrique.

La machine à laver le linge 1 comprend des moyens de commande 5, et notamment au moins un microcontrôleur, permettant de dérouler des programmes de nettoyage prédéterminés.

Bien entendu, cette machine à laver le linge 1 comporte tous les organes nécessaires (non représentés) au fonctionnement et à l'exécution des cycles de lavage, de rinçage et d'essorage du linge.

On va à présent décrire, en référence aux figures 1 à 5, un échangeur de chaleur comprenant au moins une réserve d'un matériau à accumulation de chaleur d'un appareil de lavage, et en particulier d'une machine à laver le linge, conforme à l'invention.

La machine à laver le linge 1 comprend un échangeur de chaleur 6.

La cuve de lavage 3 contient au moins un bain de lavage et/ou de rinçage utilisé lors d'un cycle de fonctionnement de la machine à laver le linge 1.

La machine à laver le linge 1 comprend un circuit hydraulique de distribution d'eau 7.

Le circuit hydraulique de distribution d'eau 7 comprend une pluralité de tuyaux d'écoulement d'eau 10, 11, 12, 13, 14, 18.

Une eau d'un bain de lavage et/ou de rinçage est définie comme de l'eau permettant le nettoyage du linge et circulant dans le circuit hydraulique 7 d'une machine à laver le linge 1. L'origine de l'eau d'un bain de lavage et/ou de rinçage est une eau arrivant du réseau d'alimentation de la machine à laver le linge 1.

L'échangeur de chaleur 6 comprend au moins une réserve d'un matériau à accumulation de chaleur 8 captant l'énergie calorifique d'au moins un premier bain de lavage et/ou de rinçage et restituant ladite énergie calorifique captée à au moins un deuxième bain de lavage et/ou de rinçage.

La machine à laver le linge 1 comprend un réservoir 9 en communication fluidique avec la cuve de lavage 3.

Où lesdits au moins un premier et deuxième bain de lavage et/ou de rinçage sont mis en circulation successivement entre la cuve de lavage 3 et le réservoir 9.

Le réservoir 9 comporte ladite au moins une réserve d'un matériau à accumulation de chaleur 8.

La cuve de lavage 3 et le réservoir 9 comportant ladite au moins une réserve d'un matériau à accumulation de chaleur 8 sont couplés de manière fluidique de sorte que lesdits au moins un premier et deuxième bain de lavage et/ou de rinçage puissent circuler depuis ladite cuve de lavage 3 vers ledit réservoir 9 et inversement.

Le réservoir 9 est adapté à contenir au moins en partie un bain de lavage et/ou de rinçage de sorte à créer un échangeur de chaleur 6 entre au moins une réserve d'un matériau à accumulation de chaleur 8 et l'un desdits au moins un premier et deuxième bain de lavage et/ou de rinçage provenant de la cuve de lavage 3.

Le matériau à accumulation de chaleur est contenu dans au moins une réserve 8 de sorte à absorber ou à restituer l'énergie calorifique d'au moins un bain de lavage et/ou de rinçage mis en circulation entre la cuve de lavage 3 et le réservoir 9.

Ladite au moins une réserve d'un matériau à accumulation de chaleur 8 est également adaptée à stocker l'énergie calorifique captée d'au moins un premier bain de lavage et/ou de rinçage avant de restituer cette énergie calorifique à un deuxième bain de lavage et/ou de rinçage.

Le réservoir 9 comportant au moins une réserve d'un matériau à accumulation de chaleur 8 peut ainsi recevoir successivement ledit au moins un premier bain de lavage et/ou de rinçage pour l'absorption d'énergie calorifique par le matériau à accumulation de chaleur et ledit au moins un deuxième bain de lavage et/ou de rinçage pour la récupération d'énergie calorifique absorbée par ledit matériau à accumulation de chaleur.

De cette manière, les phases d'échange de chaleur entre le matériau à accumulation de chaleur et lesdits au moins un premier et deuxième bain de lavage et/ou de rinçage sont raccourcies et d'efficacité améliorée tout en simplifiant la structure de la machine à laver le linge 1 et l'industrialisation de celle-ci.

Lors du remplissage du réservoir 9 logeant ladite au moins une réserve d'un matériau à accumulation de chaleur 8 par lesdits au moins un premier et deuxième bain de lavage et/ou de rinçage, ladite au moins une réserve 8 contenant un matériau à accumulation de chaleur est entourée par lesdits au moins un premier et deuxième bain de lavage et/ou de rinçage.

Le réservoir est soit interne soit externe à la carrosserie 2 de la machine à laver 1.

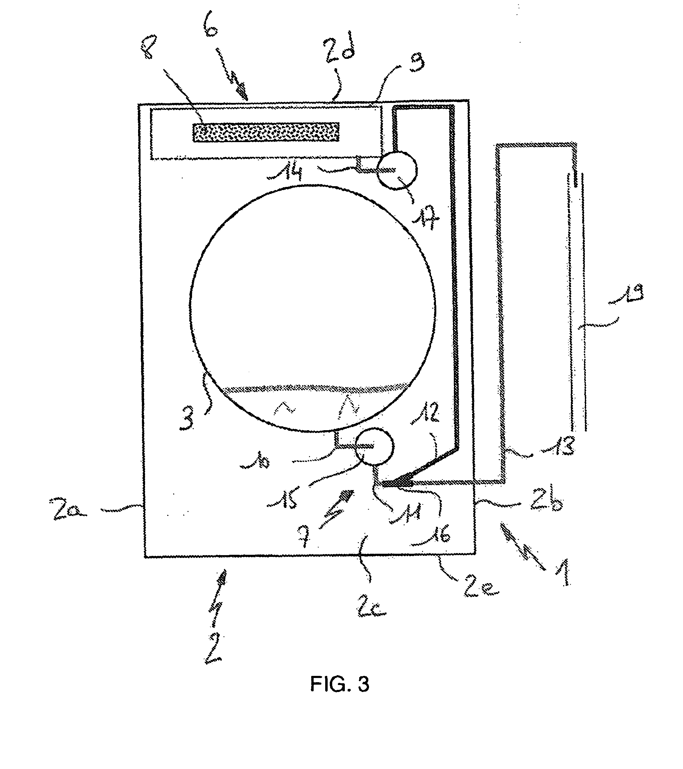

Dans un premier mode de réalisation tel qu'illustré aux figures 1 et 3, le réservoir 9 comportant ladite au moins une réserve d'un matériau à accumulation de chaleur 8 est situé à l'intérieur de la machine à laver le linge 1, et en particulier entre la cuve de lavage 3 et la carrosserie 2 de la machine à laver le linge 1.

Le réservoir 9 comportant ladite au moins une réserve d'un matériau à accumulation de chaleur 8 peut être fixé par des moyens de fixation (non représentés) sur la carrosserie 2 de la machine à laver le linge 1 ou sur la cuve de lavage 3.

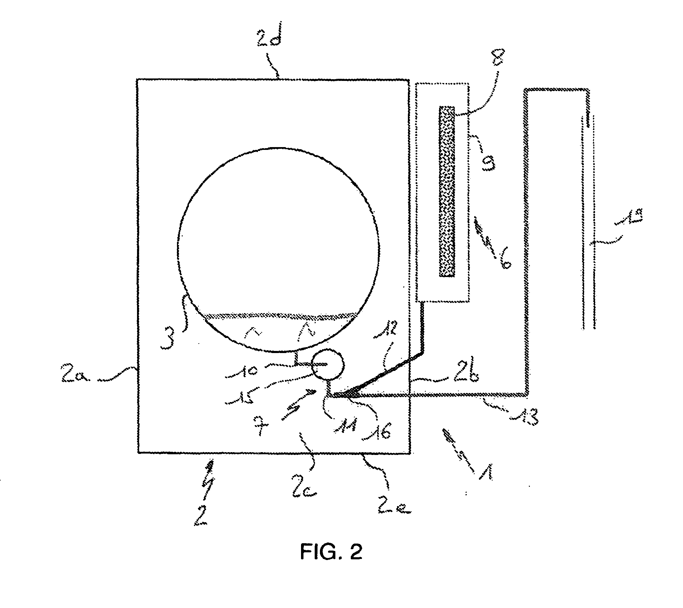

Dans un deuxième mode de réalisation tel qu'illustré aux figures 2, 4 et 5, le réservoir 9 comportant ladite au moins une réserve d'un matériau à accumulation de chaleur 8 est situé à l'extérieur de la machine à laver le linge 1.

Le réservoir 9 comportant ladite au moins une réserve d'un matériau à accumulation de chaleur 8 peut être fixé sur la carrosserie 2 de la machine à laver le linge 1, par exemple sur une paroi de la carrosserie 2 tel que une paroi latérale 2c, la paroi arrière 2b ou la paroi avant 2a, ou encore placé à côté de la carrosserie 2 de la machine à laver le linge 1.

Le réservoir 9 comportant ladite au moins une réserve d'un matériau à accumulation de chaleur 8 peut être fixé par des moyens de fixation (non représentés) sur la carrosserie 2 de la machine à laver le linge 1.

La fixation du réservoir 9 met en oeuvre des moyens de fixation classiques, par exemple du type par vissage, encliquetage élastique. Ces moyens de fixation sont bien connus de l'homme du métier et n'ont pas besoin d'être décrits plus en détail ici.

Bien entendu, le positionnement et/ou la fixation du réservoir avec la carrosserie de la machine à laver ne sont nullement limitatifs et peuvent être différents.

Le positionnement du réservoir à l'extérieur de la machine à laver le linge 1 permet de disposer de l'espace maximal disponible à l'intérieur de la carrosserie 2 pour avoir une cuve de lavage 3 de dimensions les plus importantes possibles.

La machine à laver le linge 1 comprend au moins un moyen de mise en circulation 15, 16, 17 desdits au moins un premier et deuxième bain de lavage et/ou de rinçage entre la cuve de lavage 3 et le réservoir 8, où ledit au moins un moyen de mise en circulation 15, 16, 17 introduit successivement lesdits au moins un premier et deuxième bain de lavage et/ou de rinçage dans ledit réservoir 8, et où ledit au moins un moyen de mise en circulation 15, 16, 17 évacue successivement ledit au moins un premier bain de lavage et/ou de rinçage depuis ledit réservoir 8 et ledit au moins un deuxième bain de lavage et/ou de rinçage depuis ledit réservoir 8 vers ladite cuve de lavage 3.

Ledit au moins un moyen de mise en circulation 15, 16, 17 mettant en oeuvre une circulation d'eau entre la cuve de lavage 3 et le réservoir 9 comprend une première pompe 15 et/ou une deuxième pompe 17 et/ou au moins un moyen de déviation d'eau 16.

Le réservoir 9 comporte ladite au moins une réserve d'un matériau à accumulation de chaleur 8, où lesdits au moins un premier et deuxième bain de lavage et/ou de rinçage sont stockés successivement à l'intérieur dudit réservoir 9 lors des échanges de chaleur entre lesdits au moins un premier et deuxième bain de lavage et/ou de rinçage et ladite au moins une réserve d'un matériau à accumulation de chaleur 8, et où ladite au moins une réserve d'un matériau à accumulation de chaleur 8 stocke l'énergie calorifique dudit au moins un premier bain de lavage et/ou de rinçage et restitue ladite énergie calorifique captée audit au moins un deuxième bain de lavage et/ou de rinçage.

La cuve de lavage 3 et le réservoir 9 comportant au moins une réserve d'un matériau à accumulation de chaleur 8 sont couplés de manière fluidique de sorte que lesdits au moins un premier et deuxième bain de lavage et/ou de rinçage puissent circuler depuis ladite cuve de lavage 3 vers ledit réservoir 9 puis dudit réservoir 9 vers soit la cuve de lavage 3 soit un réseau d'eau usée 19.

Le réservoir 9 est adapté à contenir au moins en partie un bain de lavage et/ou de rinçage de sorte à créer un échangeur de chaleur 6 entre ladite au moins une réserve d'un matériau à accumulation de chaleur 8 et l'un desdits au moins un premier et deuxième bain de lavage et/ou de rinçage provenant de la cuve de lavage 3.

Ladite au moins une réserve d'un matériau à accumulation de chaleur 8 est adaptée à stocker l'énergie calorifique captée d'au moins un premier bain de lavage et/ou de rinçage avant de restituer cette énergie calorifique à un deuxième bain de lavage et/ou de rinçage.

Le réservoir 9 comportant au moins une réserve d'un matériau à accumulation de chaleur 8 peut ainsi recevoir successivement ledit au moins un premier bain de lavage et/ou de rinçage pour l'absorption d'énergie calorifique par le matériau à accumulation de chaleur et ledit au moins un deuxième bain de lavage et/ou de rinçage pour la restitution d'énergie calorifique absorbée par ledit matériau à accumulation de chaleur.

De cette manière, les phases d'échange de chaleur entre le matériau à accumulation de chaleur et lesdits au moins un premier et deuxième bain de lavage et/ou de rinçage sont raccourcies et d'efficacité améliorée tout en simplifiant la structure de la machine à laver le linge 1 et l'industrialisation de celui-ci.

Lors du remplissage du réservoir 9 logeant ladite au moins une réserve d'un matériau à accumulation de chaleur 8 par lesdits au moins un premier et deuxième bain de lavage et/ou de rinçage, ladite au moins une réserve d'un matériau à accumulation de chaleur 8 est en contact permanent avec lesdits au moins un premier et deuxième bain de lavage et/ou de rinçage.

Ainsi, les échanges de chaleur entre le matériau à accumulation de chaleur de ladite au moins une réserve 8 et lesdits au moins un premier et deuxième bain de lavage et/ou de rinçage sont optimisés grâce à une surface d'échange de chaleur maximale.

Dans les modes de réalisation illustrés aux figures 1 à 5, le réservoir 9 est couplé de manière fluidique à la cuve de lavage 3 au travers d'une première pompe 15.

Ainsi, l'eau d'au moins un bain de lavage et/ou de rinçage peut être mise en circulation depuis la cuve de lavage 3 jusqu'au réservoir 9 comportant ladite au moins une réserve d'un matériau à accumulation de chaleur 8 au moyen de la première pompe 15.

La première pompe 15 est reliée en entrée à la cuve de lavage 3, par exemple par une conduite de circulation d'eau 10.

Et la première pompe 15 est reliée en sortie à au moins une conduite de circulation d'eau 11 alimentant en eau le réservoir 9 comportant ladite au moins une réserve d'un matériau à accumulation de chaleur 8.

L'alimentation eau d'au moins un bain de lavage et/ou de rinçage depuis la cuve de lavage 3 jusqu'au réservoir 9 comportant ladite au moins une réserve d'un matériau à accumulation de chaleur 8 peut être contrôlée par au moins un moyen de déviation d'eau 16 et la première pompe 15. Ledit au moins un moyen de déviation d'eau 16 et la première pompe 15 sont commandés par des moyens de commande 5 de la machine à laver le linge 1, tel que par exemple un microcontrôleur, et/ou par des moyens de commande 21 du réservoir 9.

Ledit au moins un moyen de déviation d'eau 16 peut être une vanne multivoies, et notamment à au moins deux voies.

Ledit au moins un moyen de déviation d'eau 16 est situé entre la conduite de circulation d'eau 11 connectée à la première pompe 15 et une conduite de circulation d'eau 12 connectée directement ou non au réservoir 9 comportant ladite au moins une réserve d'un matériau à accumulation de chaleur 8.

Ledit au moins un moyen de mise en circulation 15, 16, 17 comprend au moins la première pompe 15 et ledit au moins un moyen de déviation d'eau 16, et ladite première pompe 15 introduit successivement lesdits au moins un premier et deuxième bain de lavage et/ou de rinçage depuis la cuve de lavage 3 dans le réservoir 9.

En référence aux figures 1, 2 et 4, la première pompe 15 peut évacuer ledit au moins un premier bain de lavage et/ou de rinçage depuis le réservoir 9 vers la cuve de lavage 3 ou vers un réseau d'eau usée 19, soit ledit au moins un premier bain de lavage et/ou de rinçage peut être évacué depuis le réservoir 9 vers la cuve de lavage 3 par gravité et au travers de la première pompe 15 étant à l'arrêt.

En particulier, ledit au moins un moyen de mise en circulation 15, 16, 17 peut comprendre au moins la première pompe 15 et ledit au moins un moyen de déviation d'eau 16, et lesdits au moins un premier et deuxième bain de lavage et/ou de rinçage peuvent être évacués par gravité depuis le réservoir 9 vers la cuve de lavage 3 puis par ladite première pompe 15 depuis ladite cuve de lavage 3 vers un réseau d'eau usée 19.

En référence aux figures 3 et 5, ledit au moins un moyen de mise en circulation 15, 16, 17 comprend au moins une deuxième pompe 17 évacuant ledit au moins un premier bain de lavage et/ou de rinçage depuis ledit réservoir 9 vers la cuve de lavage 3 ou vers un réseau d'eau usée 19.

En particulier, ledit au moins un moyen de mise en circulation 15, 16, 17 comprend au moins la deuxième pompe 17 et ledit au moins un moyen de déviation d'eau 16, et ladite deuxième pompe 17 évacue ledit au moins un premier bain de lavage et/ou de rinçage depuis le réservoir 9 vers un réseau d'eau usée 19.

Le circuit hydraulique de distribution d'eau 7, tel qu'illustré aux figures 3 et 5, comprend :
o une première pompe 15 reliant la cuve de lavage 3 audit au moins un moyen de déviation d'eau 16, et
o une deuxième pompe 17 reliant le réservoir 9 audit au moins un moyen de déviation d'eau 16.

Aux figures 1 à 5, le réservoir 9 est alimenté en eau d'au moins un bain de lavage et/ou de rinçage par des conduites de circulation d'eau 10, 11, 12 depuis la cuve de lavage 3 de la machine à laver le linge 1. L'alimentation en eau d'au moins un bain de lavage et/ou de rinçage du réservoir 9 depuis la cuve de lavage 3 de la machine à laver le linge 1 est mise en oeuvre par au moins une première pompe 15 de la machine à laver le linge 1, en particulier une pompe de vidange.

Le réservoir 9 alimente en eau d'au moins un bain de lavage et/ou de rinçage, d'une phase précédente d'un cycle de lavage en cours de mise en oeuvre ou d'un cycle de lavage précédent, la cuve de lavage 3 de la machine à laver le linge 1 par des conduites de circulation d'eau 10, 11, 12.

Lors du remplissage du réservoir 9 avec de l'eau d'au moins un bain de lavage et/ou de rinçage, ledit au moins un moyen de déviation d'eau 16 est positionné dans un état de remplissage dudit réservoir 9.

En référence aux figures 3 et 5, le remplissage du réservoir 9 avec de l'eau d'au moins un bain de lavage et/ou de rinçage est mis en oeuvre suite à l'arrêt d'une deuxième pompe 17.

Aux figures 1, 2 et 4, l'alimentation en eau d'au moins un bain de lavage et/ou de rinçage de la cuve de lavage 3 de la machine à laver le linge 1 depuis le réservoir 9 est mise en oeuvre par gravité suite au positionnement dudit au moins un moyen de déviation d'eau 16 dans un état de remplissage de ladite cuve de lavage 3 et à l'arrêt de la première pompe 15.

Aux figures 3 et 5, l'alimentation en eau d'au moins un bain de lavage et/ou de rinçage de la cuve de lavage 3 de la machine à laver le linge 1 depuis le réservoir 9 est mise en oeuvre par une deuxième pompe 17 du réservoir 9, en particulier une pompe de vidange, suite au positionnement dudit au moins un moyen de déviation d'eau 16 dans un état de remplissage de ladite cuve de lavage 3 et à l'arrêt de la première pompe 15. La deuxième pompe 17 peut être reliée au réservoir 9 au moyen d'une conduite de circulation d'eau 14.

Une desdites première et deuxième pompes 15, 17 peut ainsi être adaptée à permettre le passage d'un flux d'eau depuis la cuve de lavage 3 jusqu'au réservoir 9, et inversement, lorsque celle-ci est inactive pendant qu'une autre desdites première et deuxième pompes 15, 17 est active.

De cette manière, une desdites première et deuxième pompes 15, 17 étant à l'arrêt est adaptée à laisser passer un flux d'eau au travers de celle-ci lorsque l'autre desdites première et deuxième pompes 15, 17 fonctionne de sorte à ne pas bloquer la circulation d'eau au travers du circuit hydraulique de distribution d'eau 7 de la machine à laver le linge 1, et inversement.

Avantageusement, lesdites première et deuxième pompes 15, 17 sont des pompes centrifuges.

La spécificité de ces pompes centrifuges consiste en ce qu'elles permettent le passage d'un flux d'eau à l'intérieur de leur corps lorsqu'elles ne sont pas mises en fonctionnement.

L'utilisation de pompes centrifuges permet de pallier les inconvénients des pompes volumétriques où l'eau est comprimée pour être mise en déplacement provoquant la mise en fonctionnement de ces pompes volumétriques continuellement pour envoyer de l'eau dans une seule direction ou le passage d'eau dans d'autres tuyaux d'écoulement d'eau pour envoyer de l'eau dans une direction opposée.

Par ailleurs, l'emploi de pompes centrifuges pour lesdites première et deuxième pompes 15, 17 de la machine à laver le linge 1 permet de minimiser les coûts d'obtention de cette dernière puisque les pompes centrifuges sont moins onéreuses que les pompes volumétriques.

Dans les modes de réalisation illustrés aux figures 1 à 3 et 5, la conduite de circulation d'eau 11 peut servir :
- d'une part à alimenter en eau d'au moins un bain de lavage et/ou de rinçage le réservoir 9 depuis la cuve de lavage 3 de la machine à laver le linge 1, et
- d'autre part à alimenter en eau d'au moins un bain de lavage et/ou de rinçage, d'une phase précédente d'un cycle de lavage en cours de mise en oeuvre ou d'un cycle de lavage précédent, la cuve de lavage 3 de la machine à laver le linge 1 depuis le réservoir 9.

Bien entendu et de manière nullement limitative, l'alimentation en eau d'au moins un bain de lavage et/ou de rinçage depuis la cuve de lavage 3 de la machine à laver le linge 1 vers le réservoir 9 et inversement peut être mise en oeuvre au moyen de conduites de circulation d'eau différentes.

En référence aux figures 1 à 3 et 5, la conduite de circulation d'eau 11 peut également servir à vidanger la cuve de lavage 3 de la machine à laver le linge 1 en dirigeant de l'eau d'au moins un bain de lavage et/ou de rinçage vers le réseau d'eau usée 19 suite au passage de cette eau d'au moins un bain de lavage et/ou de rinçage au travers d'organes montés sur le circuit hydraulique de distribution d'eau 7, tel que par exemple ledit au moins un moyen de déviation d'eau 16, et sans avoir été stockée dans ledit réservoir 9.

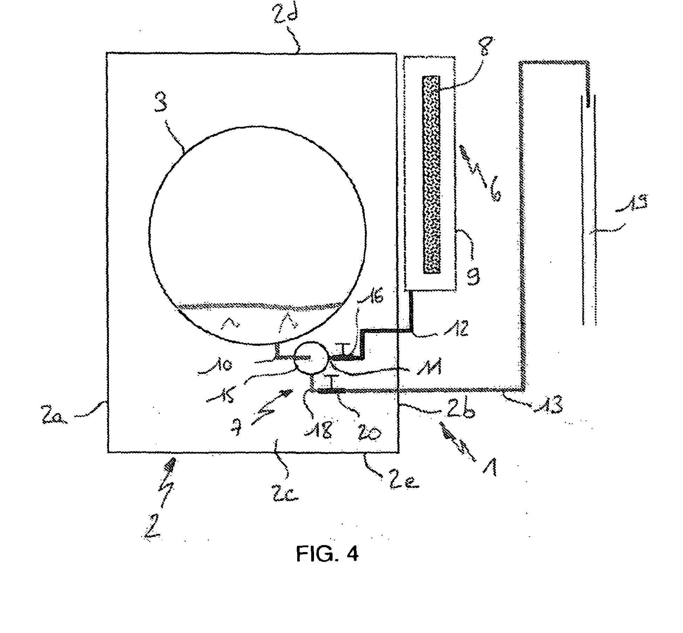

A la figure 4, une conduite de circulation d'eau 18 est disposée entre la première pompe 15 et une vanne 20 de sorte à vidanger la cuve de lavage 3 de la machine à laver le linge 1 vers un réseau d'eau usée 19. La première pompe 15 est connectée d'une part à la conduite de circulation d'eau 11 permettant le remplissage et l'évacuation en eau du réservoir 9 au moyen de la vanne 16 et d'autre part à la conduite de circulation d'eau 18 permettant l'évacuation d'eau vers un réseau d'eau usée 19 au moyen de la vanne 20.

En référence aux figures 1 à 5, le réservoir 9 est vidangé de l'eau d'au moins un premier bain de lavage et/ou de rinçage provenant de la cuve de lavage 3 de la machine à laver le linge 1 par des conduites de circulation d'eau 12, 13 connectées au réservoir 9, audit au moins un moyen de déviation d'eau 16 et au réseau d'eau usée 19.

En référence aux figures 1 à 3 et 5, la conduite de circulation d'eau 11 reliant la première pompe 15 audit au moins un moyen de déviation d'eau 16 et la conduite de circulation d'eau 13 reliant ledit au moins un moyen de déviation d'eau 16 au réseau d'eau usée 19 sont interconnectées au moyen dudit au moins un moyen de déviation d'eau 16 de sorte à diriger l'eau d'au moins un bain de lavage et/ou de rinçage vers le réseau d'eau usée 19 soit directement en sortie de la cuve de lavage 3 de la machine à laver le linge 1 soit après le passage dans le réservoir 9.

Aux figures 1 à 3 et 5, ledit au moins un moyen de déviation d'eau 16 est connecté à trois conduites de circulation d'eau 11, 12, 13 d'alimentation et/ou d'évacuation d'eau d'au moins un bain de lavage et/ou de rinçage.

Aux figures 1 et 2, une première conduite de circulation d'eau 11 connectée à la sortie de la première pompe 15 est branchée sur ledit au moins un moyen de déviation d'eau 16. Une deuxième conduite de circulation d'eau 12 connectée au réservoir 9 est branchée sur ledit au moins un moyen de déviation d'eau 16. Une troisième conduite de circulation d'eau 13 connectée au réseau d'eau usée 19 est branchée sur ledit au moins un moyen de déviation d'eau 16.

Aux figures 3 et 5, une première conduite de circulation d'eau 11 connectée à la sortie de la première pompe 15 est branchée sur ledit au moins un moyen de déviation d'eau 16. Une deuxième conduite de circulation d'eau 12 connectée à la deuxième pompe 17 est branchée sur ledit au moins un moyen de déviation d'eau 16. Une troisième conduite de circulation d'eau 13 connectée au réseau d'eau usée 19 est branchée sur ledit au moins un moyen de déviation d'eau 16.

A la figure 4, une première conduite de circulation d'eau 11 connectée à la sortie de la première pompe 15 est branchée sur ledit au moins un moyen de déviation d'eau 16 étant une vanne. Une deuxième conduite de circulation d'eau 12 connectée au réservoir 9 est branchée sur ledit au moins un moyen de déviation d'eau 16. Une troisième conduite de circulation d'eau 13 connectée au réseau d'eau usée 19 est branchée sur une vanne 20. Et une quatrième conduite de circulation d'eau 18 connectée sur la vanne 20 est branchée en sortie de la première pompe 15. La circulation d'eau dans le circuit hydraulique de distribution d'eau 7 de la machine à laver le linge 1, du mode de réalisation illustré à la figure 4, est commandée par des moyens de commande de ladite machine 1 et/ou des moyens de commande du réservoir 9 contrôlant l'ouverture et la fermeture des vannes 16, 20 situées en aval de la première pompe 15.

La quantité d'eau d'au moins un bain de lavage et/ou de rinçage dans le réservoir 9 peut être contrôlée par des moyens de commande 5 de la machine à laver le linge 1 et/ou par des moyens de commande 21 du réservoir 9.

Le réservoir 9 comportant ladite au moins une réserve d'un matériau à accumulation de chaleur 8 comprend une ouverture d'alimentation en eau d'au moins un bain de lavage et/ou de rinçage (non représentée).

Cette ouverture d'alimentation en eau d'au moins un bain de lavage et/ou de rinçage du réservoir 9 peut également servir comme ouverture d'évacuation d'eau d'au moins un bain de lavage et/ou de rinçage. Cette ouverture d'entrée/sortie d'eau d'au moins un bain de lavage et/ou de rinçage du réservoir 9 est préférentiellement située en partie inférieure dudit réservoir 9.

Dans un mode de réalisation, le réservoir 9 comportant ladite au moins une réserve d'un matériau à accumulation de chaleur 8 est également couplé de manière fluidique avec la cuve de lavage 3 au moyen d'une connexion (non représentée) pouvant être réalisée par une conduite.

Ainsi, la connexion entre le réservoir 9 comportant ladite au moins une réserve d'un matériau à accumulation de chaleur 8 et la cuve de lavage 3 permet d'évacuer l'air contenu dans ledit réservoir 9 lors de l'introduction d'eau d'au moins un bain de lavage et/ou de rinçage dans ledit réservoir 9 par l'ouverture d'alimentation en eau.

La connexion entre le réservoir 9 comportant ladite au moins une réserve d'un matériau à accumulation de chaleur 8 et la cuve de lavage 3 peut également permettre d'évacuer l'eau d'au moins un bain de lavage et/ou de rinçage introduite dans ledit réservoir 9 dans la cuve de lavage 3.

Le réservoir 9 comportant ladite au moins une réserve d'un matériau à accumulation de chaleur 8 peut être situé verticalement ou horizontalement le long d'une paroi 2a, 2b, 2c, 2d, 2e de la carrosserie 2 et s'étendre entre une ouverture d'alimentation en eau et une ouverture de sortie d'air et/ou d'eau.

L'ouverture de sortie du réservoir 9 peut servir pour réaliser une mise à l'air connectée avec la cuve de lavage 3, pour déverser le trop plein d'eau d'au moins un bain de lavage et/ou de rinçage introduit à l'intérieur dudit réservoir 9 vers la cuve de lavage 3, et/ou pour mettre l'eau d'au moins un bain de lavage et/ou de rinçage en circulation depuis l'intérieur dudit réservoir 9 vers la cuve de lavage 3.

L'ouverture de sortie du réservoir 9 est préférentiellement située en partie supérieure dudit réservoir 9.

Par ailleurs, l'ouverture d'alimentation en eau du réservoir 9 peut également servir à vidanger complètement ledit réservoir 9 de l'eau d'au moins un bain de lavage et/ou de rinçage introduite à l'intérieur dudit réservoir 9.

Pratiquement, ladite au moins une réserve d'un matériau à accumulation de chaleur 8 est fixée à l'intérieur du réservoir 9 par des moyens de fixation (non représentés).

La fixation de ladite au moins une réserve d'un matériau à accumulation de chaleur 8 du réservoir 9 met en oeuvre des moyens de fixation classiques, par exemple du type par vissage, encliquetage élastique. Ces moyens de fixation sont bien connus de l'homme du métier et n'ont pas besoin d'être décrits plus en détail ici.

Préférentiellement, le matériau à accumulation de chaleur de ladite au moins une réserve 8 est un matériau à changement de phase.

La température de changement de phase du matériau à accumulation de chaleur de ladite au moins une réserve 8 est comprise dans une plage de température pouvant s'étendre entre 30 °C et 40 °C.

Bien entendu, la température de changement de phase du matériau à accumulation de chaleur n'est nullement limitative et peut être différente.

Le matériau à changement de phase de ladite au moins une réserve d'un matériau à accumulation de chaleur 8 peut être notamment de la paraffine, de l'huile de palme, ou encore un acide gras saturé.

Bien entendu, le type de matériau à changement de phase n'est nullement limitatif et peut être différent.

Dans un autre mode de réalisation, le matériau à accumulation de chaleur de ladite au moins une réserve 8 peut être un matériau sous forme solide tel que par exemple du béton, du métal, de la brique ou de la fonte, ou encore un matériau sous forme liquide tel que par exemple de l'eau ou de l'huile.

Bien entendu, le type de matériau à accumulation de chaleur sous forme solide ou liquide n'est nullement limitatif et peut être différent.

Préférentiellement, le réservoir 9 comportant ladite au moins une réserve d'un matériau à accumulation de chaleur 8 est isolé thermiquement.

Ainsi, l'énergie calorifique d'au moins un bain de lavage et/ou de rinçage captée par ladite au moins une réserve d'un matériau à accumulation de chaleur 8 est conservée pendant une durée plus longue de sorte à restituer la plus grande partie de cette énergie calorifique captée lors d'une phase suivante d'un cycle de fonctionnement en cours ou lors d'une phase d'un cycle de fonctionnement suivant mis en oeuvre par la machine à laver le linge 1.

Par ailleurs, le réservoir 9 peut comprendre un moyen de détection de remplissage en eau 22 dudit réservoir 9, tel qu'illustré à la figure 5.

Le moyen de détection de remplissage en eau 22 peut être par exemple un détecteur de niveau haut du type pressostat, ou encore à contact direct avec flotteur.

Bien entendu, le type de moyen de détection de remplissage en eau du réservoir de stockage d'eau n'est nullement limitatif et peut être différent.

Le moyen de détection de remplissage en eau 22 permet d'arrêter le fonctionnement de la première pompe 15 au travers des moyens de commande 5 de la machine à laver le linge 1 ou des moyens de commande 21 du réservoir 9 dès qu'un niveau d'eau maximum dans le réservoir 9 est atteint et détecté par ledit moyen de détection de remplissage en eau 22.

On va décrire à présent un procédé de commande en fonctionnement d'un appareil de lavage conforme à l'invention.

Le procédé comprend au moins les étapes suivantes :
- introduction et stockage dudit au moins un premier bain de lavage et/ou de rinçage dans un réservoir 9, où ledit réservoir 9 est en communication fluidique avec ladite cuve de lavage 3 et comporte ladite au moins une réserve d'un matériau à accumulation de chaleur 8 ;
- récupération de l'énergie calorifique dudit au moins un premier bain de lavage et/ou de rinçage par ladite au moins une réserve d'un matériau à accumulation de chaleur 8 et stockage de ladite énergie calorifique par ladite au moins une réserve d'un matériau à accumulation de chaleur 8 ;
- évacuation dudit au moins un premier bain de lavage et/ou de rinçage depuis ledit réservoir 9 ;
- introduction et stockage dudit au moins un deuxième bain de lavage et/ou de rinçage dans ledit réservoir 9 ;
- restitution de ladite énergie calorifique captée par ladite au moins une réserve d'un matériau à accumulation de chaleur 8 audit au moins un deuxième bain de lavage et/ou de rinçage ; et
- évacuation dudit au moins un deuxième bain de lavage et/ou de rinçage depuis ledit réservoir 9 vers ladite cuve de lavage 3.

Ainsi, au moins un premier bain de lavage et/ou de rinçage est introduit depuis la cuve de lavage 3 dans le réservoir 9 comportant au moins une réserve d'un matériau à accumulation de chaleur 8 et stocké dans ledit réservoir 9 pour récupérer l'énergie calorifique dudit au moins un premier bain de lavage et/ou de rinçage. Et au moins un deuxième bain de lavage et/ou de rinçage est introduit depuis la cuve de lavage 3 dans le réservoir 9 comportant au moins une réserve d'un matériau à accumulation de chaleur 8 et stocké dans ledit réservoir 9 pour restituer l'énergie calorifique captée audit au moins un deuxième bain de lavage et/ou de rinçage suite à l'évacuation dudit au moins un premier bain de lavage et/ou de rinçage depuis ledit réservoir 9.

Lesdits au moins un premier et deuxième bain de lavage et/ou de rinçage introduits et stockés successivement dans le réservoir 9 échangent de la chaleur avec ladite au moins une réserve d'un matériau à accumulation de chaleur 8 logée à l'intérieur dudit réservoir 9 de sorte que ledit matériau à accumulation de chaleur absorbe l'énergie calorifique dudit au moins un premier bain de lavage et/ou de rinçage et que ledit matériau à accumulation de chaleur restitue l'énergie calorifique captée audit au moins un deuxième bain de lavage et/ou de rinçage.

Avantageusement, l'étape d'évacuation dudit au moins un deuxième bain de lavage et/ou de rinçage depuis le réservoir 9 vers la cuve de lavage 3 est mise en oeuvre au cours d'un cycle de fonctionnement suivant de l'appareil de lavage 1.

Et en particulier, l'étape d'évacuation dudit au moins un deuxième bain de lavage et/ou de rinçage depuis le réservoir 9 vers la cuve de lavage 3 est mise en oeuvre au cours d'une phase de lavage d'un cycle de fonctionnement suivant de l'appareil de lavage 1.

L'étape d'introduction et de stockage dudit au moins un premier bain de lavage et/ou de rinçage depuis la cuve de lavage 3 à l'intérieur du réservoir 9 est suivie d'une étape de récupération et de stockage de l'énergie calorifique dudit au moins un premier bain de lavage et/ou de rinçage par ladite au moins une réserve d'un matériau à accumulation de chaleur 8.

Lors de l'étape de récupération de l'énergie calorifique dudit au moins un premier bain de lavage et/ou de rinçage par ladite au moins une réserve d'un matériau à accumulation de chaleur 8 du type à changement de phase, le matériau à changement de phase passe de l'état solide à l'état liquide de sorte à récupérer l'énergie calorifique dudit au moins un premier bain de lavage et/ou de rinçage.

L'étape de récupération de l'énergie calorifique dudit au moins un premier bain de lavage et/ou de rinçage est suivie d'une étape d'évacuation dudit au moins un premier bain de lavage et/ou de rinçage depuis le réservoir 9 vers la cuve de lavage 3 et/ou vers un réseau d'eau usée 19.

Dans un mode de réalisation, suite à l'étape de récupération de l'énergie calorifique dudit au moins un premier bain de lavage et/ou de rinçage par ladite au moins une réserve d'un matériau à accumulation de chaleur 8, l'eau dudit au moins un premier bain de lavage et/ou de rinçage est évacuée dans la cuve de lavage 3. Puis, cette eau dudit au moins un premier bain de lavage et/ou de rinçage est évacuée depuis la cuve de lavage 3 vers un réseau d'eau usée 19 au moyen d'au moins une première pompe 15 et d'au moins un moyen de déviation d'eau 16 ou d'au moins une deuxième pompe 17 et d'au moins un moyen de déviation d'eau 16.

Le retour dudit au moins un premier bain de lavage et/ou de rinçage dans la cuve de lavage 3 suite à l'étape de récupération de l'énergie calorifique peut permettre de filtrer l'eau dudit au moins un premier bain de lavage et/ou de rinçage par un dispositif de filtration (non représenté) soit pour réutiliser l'eau filtrée lors d'une phase d'un cycle de fonctionnement en cours de l'appareil de lavage 1 soit pour retirer des salissures ou des éléments en suspension avant d'évacuer l'eau filtrée vers un réseau d'eau usée 19.

Dans un autre mode de réalisation, suite à l'étape de récupération et de stockage de l'énergie calorifique dudit au moins un premier bain de lavage et/ou de rinçage par ladite au moins une réserve d'un matériau à accumulation de chaleur 8, l'eau dudit au moins un premier bain de lavage et/ou de rinçage est évacuée directement vers un réseau d'eau usée 19 au moyen d'une deuxième pompe 17 et d'au moins un moyen de déviation d'eau 16.

L'étape d'introduction et de stockage dudit au moins un deuxième bain de lavage et/ou de rinçage depuis la cuve de lavage 3 à l'intérieur du réservoir 9 est suivie d'une étape de restitution de l'énergie calorifique captée par ladite au moins une réserve d'un matériau à accumulation de chaleur 8.

Lors de l'étape de restitution de l'énergie calorifique captée audit au moins un deuxième bain de lavage et/ou de rinçage par ladite au moins une réserve d'un matériau à accumulation de chaleur 8 du type à changement de phase, le matériau à changement de phase passe de l'état liquide à l'état solide de sorte à restituer l'énergie calorifique captée précédemment audit au moins un deuxième bain de lavage et/ou de rinçage.

L'étape de restitution de l'énergie calorifique captée est suivie d'une étape d'évacuation dudit au moins un deuxième bain de lavage et/ou de rinçage depuis le réservoir 9 vers la cuve de lavage 3.

Dans les modes de réalisation illustrés aux figures 1 à 5, suite à l'étape de restitution de l'énergie calorifique captée audit au moins un deuxième bain de lavage et/ou de rinçage par ladite au moins une réserve d'un matériau à accumulation de chaleur 8, l'eau dudit au moins un deuxième bain de lavage et/ou de rinçage est évacuée dans la cuve de lavage 3 pour être réutilisée lors d'un cycle de fonctionnement suivant de l'appareil de lavage 1 ou lors d'une phase d'un cycle de fonctionnement en cours de l'appareil de lavage 1. Puis, cette eau dudit au moins un deuxième bain de lavage et/ou de rinçage peut être évacuée vers un réseau d'eau usée 19 au moyen d'au moins une première pompe 15 et d'au moins un moyen de déviation d'eau 16 ou d'au moins une deuxième pompe 17 et d'au moins un moyen de déviation d'eau 16.

Dans les modes de réalisation illustrés aux figures 1 à 5, suite à l'étape de restitution de l'énergie calorifique captée audit au moins un deuxième bain de lavage et/ou de rinçage par ladite au moins une réserve d'un matériau à accumulation de chaleur 8, l'eau dudit au moins un deuxième bain de lavage et/ou de rinçage peut être évacuée vers un réseau d'eau usée 19 si la durée de conservation dudit au moins un deuxième bain de lavage et/ou de rinçage dans le réservoir 9 a dépassé une durée limite.

Le vidage du réservoir 9 peut être commandé par un utilisateur, par des moyens de commande 5 de l'appareil de lavage 1, ou par des moyens de commande 21 dudit réservoir 9 de sorte à évacuer l'eau dudit réservoir 9 vers un réseau d'eau usée 19, notamment avant ou après une période prolongée de non utilisation dudit appareil 1.

Par ailleurs, l'eau d'au moins un bain de lavage et/ou de rinçage contenue dans la cuve de lavage 3 peut être évacuée vers un réseau d'eau usée 19 directement dans le cas où l'utilisateur ne souhaite pas réutiliser cette eau pour en récupérer l'énergie calorifique, ou encore dans le cas où des moyens de commande 5 de l'appareil de lavage 1 détecte un niveau de salissures ou un niveau de coloration trop important dans l'eau d'au moins un bain de lavage et/ou de rinçage.

Lors des étapes d'échange de chaleur mises en oeuvre par l'échangeur de chaleur 6, l'eau dudit au moins un premier et deuxième bain de lavage et/ou de rinçage est introduite et stockée dans le réservoir 9 et mise en contact avec ladite au moins une réserve d'un matériau à accumulation de chaleur 8 de sorte à respectivement récupérer l'énergie calorifique dudit au moins un premier bain de lavage et/ou de rinçage par ladite au moins une réserve d'un matériau à accumulation de chaleur 8 et restituer l'énergie calorifique captée par ladite au moins une réserve d'un matériau à accumulation de chaleur 8 audit au moins un deuxième bain de lavage et/ou de rinçage.

L'eau dudit au moins un premier et deuxième bain de lavage et/ou de rinçage monte dans le réservoir 9, entoure ladite au moins une réserve d'un matériau à accumulation de chaleur 8 et soit ladite réserve 8 absorbe l'énergie calorifique dudit au moins un premier bain de lavage et/ou de rinçage soit ladite réserve 8 restitue l'énergie calorifique captée audit au moins un deuxième bain de lavage et/ou de rinçage.

Suite à un échange de chaleur entre le matériau à accumulation de chaleur et l'un desdits au moins un premier et second bain de lavage et/ou de rinçage, le réservoir 9 est vidé respectivement de l'un desdits au moins un premier et second bain de lavage et/ou de rinçage.

Ladite au moins une réserve d'un matériau à accumulation de chaleur 8 est maintenue à l'intérieur du réservoir 9 et reste dans celui-ci lors de l'évacuation de l'un desdits au moins un premier et second bain de lavage et/ou de rinçage dudit réservoir 9.

Le matériau à accumulation de chaleur est conservé à l'intérieur de ladite au moins une réserve d'un matériau à accumulation de chaleur 8 au cours des différentes étapes du procédé.

Par ailleurs, l'appareil de lavage 1 peut comprendre un cycle de nettoyage du réservoir 9 par la circulation d'un bain pouvant contenir un produit de nettoyage, tel que par exemple un produit chloré. Ce cycle de nettoyage du réservoir 9 peut ainsi permettre de retirer des salissures et/ou des éléments en suspension entraînées par au moins un des bains de lavage et/ou de rinçage provenant de la cuve de lavage 3 et introduit dans ledit réservoir 9.

En outre, le réservoir 9 peut être conçu de sorte que les surfaces internes de celui-ci soient lisses et sans bavures.

Dans un mode de réalisation de l'invention mis en oeuvre dans une machine à laver le linge telle qu'illustrée aux figures 1 à 5, l'énergie calorifique d'un bain de lavage est récupérée par ladite au moins une réserve d'un matériau à accumulation de chaleur 8 par la mise en contact du bain de lavage avec ladite au moins une réserve d'un matériau à accumulation de chaleur 8 logée à l'intérieur du réservoir 9.

Le bain de lavage peut être mis en circulation ou non à l'intérieur du réservoir 9 lors de l'étape de récupération d'énergie calorifique.

En référence aux figures 1, 2 et 4, le bain de lavage est ensuite évacué du réservoir 9 vers la cuve de lavage 3 par gravité suite au positionnement dudit au moins un moyen de déviation d'eau 16 dans un état de remplissage de ladite cuve de lavage 3 et à l'arrêt de la première pompe 15, ou vers un réseau d'eau usée 19 au moyen dudit au moins un moyen de déviation d'eau 16 positionné dans un état d'évacuation vers un réseau d'eau usée 19 et de la première pompe 15 en état de fonctionnement.

En référence aux figures 3 et 5, le bain de lavage est ensuite évacué du réservoir 9 vers la cuve de lavage 3 ou vers un réseau d'eau usée 19 au moyen de la deuxième pompe 17 et dudit au moins un moyen de déviation d'eau 16. Dans le cas où le bain de lavage est évacué du réservoir 9 vers la cuve de lavage 3, la première pompe 15 étant à l'arrêt est traversée par ledit bain de lavage.

L'énergie calorifique récupérée du bain de lavage est stockée dans ladite au moins une réserve d'un matériau à accumulation de chaleur 8 jusqu'au remplissage en eau du réseau de la cuve de lavage 3 puis du réservoir 9 d'un bain de rinçage. L'eau du réseau alimentée dans la machine à laver le linge 1 est mise en contact avec ladite au moins une au moins une réserve d'un matériau à accumulation de chaleur 8 logée dans le réservoir 9 et cette eau du bain de rinçage capte l'énergie calorifique stockée par ladite au moins une réserve d'un matériau à accumulation de chaleur 8.

En référence aux figures 1, 2 et 4, le bain de rinçage est ensuite évacué du réservoir 9 vers la cuve de lavage 3 par gravité suite au positionnement dudit au moins un moyen de déviation d'eau 16 dans un état de remplissage de ladite cuve de lavage 3 et à l'arrêt de la première pompe 15.

En référence aux figures 3 et 5, le bain de rinçage est ensuite évacué du réservoir 9 vers la cuve de lavage 3 au moyen de la deuxième pompe 17 et dudit au moins un moyen de déviation d'eau 16. Dans ce cas où le bain de rinçage est évacué du réservoir 9 vers la cuve de lavage 3, la première pompe 15 étant à l'arrêt est traversée par ledit bain de rinçage.

Et ensuite, le bain de rinçage est utilisé dans la machine à laver le linge 1 pour rincer les pièces de linge.

Suite à la phase de rinçage des pièces de linge contenues dans le tambour de la machine à laver le linge 1, l'énergie calorifique du bain de rinçage est récupérée de manière similaire à l'énergie calorifique du bain de lavage par la mise en contact du bain de rinçage avec ladite au moins une réserve d'un matériau à accumulation de chaleur 8 logée à l'intérieur du réservoir 9.

En référence aux figures 1, 2 et 4, le bain de rinçage est ensuite évacué du réservoir 9 vers la première pompe 15 par gravité suite au positionnement dudit au moins un déviation d'eau 16 dans un état de vidange dudit réservoir 9, puis de ladite première pompe 15 vers un réseau d'eau usée 19 au moyen de la première pompe 15 et dudit au moins un moyen de déviation d'eau 16 dans un état de vidange de l'appareil de lavage 1 vers un réseau d'eau usée 19.

En référence aux figures 3 et 5, le bain de rinçage est ensuite évacué du réservoir 9 vers un réseau d'eau usée 19 au moyen de la deuxième pompe 17 et dudit au moins un moyen de déviation d'eau 16 dans un état de vidange de l'appareil de lavage 1 vers un réseau d'eau usée 19.

L'énergie calorifique récupérée du bain de rinçage est stockée dans ladite au moins une réserve d'un matériau à accumulation de chaleur 8 jusqu'à une phase de lavage d'un cycle de fonctionnement suivant de la machine à laver le linge 1, où de l'eau du réseau alimentée dans la machine à laver le linge 1 est mise en contact avec ladite au moins une réserve d'un matériau à accumulation de chaleur 8 logée dans le réservoir 9 et cette eau du bain de lavage capte l'énergie calorifique stockée par ladite au moins une réserve d'un matériau à accumulation de chaleur 8.

Lors de l'utilisation des bains de lavage et de rinçage dans la cuve de lavage 3, ces bains de lavage et de rinçage peuvent être chauffés par un moyen de chauffage (non représenté) situé à l'intérieur de ladite cuve de lavage 3. Le chauffage de ces bains de lavage et de rinçage peut permettre ainsi de récupérer l'énergie calorifique de ces bains de lavage et de rinçage par ladite au moins une réserve d'un matériau à accumulation de chaleur 8.

Grâce à la présente invention, au moins un premier bain de lavage et/ou de rinçage est introduit depuis la cuve de lavage dans le réservoir comportant au moins une réserve d'un matériau à accumulation de chaleur et stocké dans ledit réservoir pour récupérer l'énergie calorifique dudit au moins un premier bain de lavage et/ou de rinçage. Et au moins un deuxième bain de lavage et/ou de rinçage est introduit depuis la cuve de lavage dans le réservoir comportant au moins une réserve d'un matériau à accumulation de chaleur et stocké dans ledit réservoir pour restituer l'énergie calorifique captée audit au moins un deuxième bain de lavage et/ou de rinçage suite à l'évacuation dudit au moins un premier bain de lavage et/ou de rinçage depuis ledit réservoir.

Bien entendu, de nombreuses modifications peuvent être apportées aux exemples de réalisation décrits précédemment sans sortir du cadre de l'invention.

Ainsi, l'appareil de lavage peut être une machine à laver le linge, une machine à laver et à sécher le linge, ou une machine à laver la vaisselle.

Et en particulier, l'ouverture d'alimentation en eau d'au moins un bain de lavage et/ou de rinçage peut être située en partie supérieure du réservoir comportant au moins une réserve d'un matériau à accumulation de chaleur.

Par ailleurs, le réservoir peut comporter plusieurs réserves de matériau à accumulation de chaleur de sorte à augmenter la surface d'échange de chaleur entre le matériau à accumulation de chaleur et lesdits au moins un premier et deuxième bain de lavage et/ou de rinçage.

## Revendications

1. Procédé de commande en fonctionnement d'un appareil de lavage (1), ledit appareil de lavage (1) comprenant une cuve de lavage (3), un échangeur de chaleur (6), ladite cuve de lavage (3) contenant au moins un bain de lavage et/ou de rinçage utilisé lors d'un cycle de fonctionnement dudit appareil de lavage (1), ledit échangeur de chaleur (6) comprenant au moins une réserve d'un matériau à accumulation de chaleur (8) captant l'énergie calorifique d'au moins un premier bain de lavage et/ou de rinçage et restituant ladite énergie calorifique captée à au moins un deuxième bain de lavage et/ou de rinçage, **caractérisé en ce que** ledit procédé comprend au moins les étapes suivantes :
- introduction et stockage dudit au moins un premier bain de lavage et/ou de rinçage dans un réservoir (9), où ledit réservoir (9) est en communication fluidique avec ladite cuve de lavage (3) et comporte ladite au moins une réserve d'un matériau à accumulation de chaleur (8) ;
- récupération de l'énergie calorifique dudit au moins un premier bain de lavage et/ou de rinçage par ladite au moins une réserve d'un matériau à accumulation de chaleur (8) et stockage de ladite énergie calorifique par ladite au moins une réserve d'un matériau à accumulation de chaleur (8) ;
- évacuation dudit au moins un premier bain de lavage et/ou de rinçage depuis ledit réservoir (9) ;
- introduction et stockage dudit au moins un deuxième bain de lavage et/ou de rinçage dans ledit réservoir (9) ;
- restitution de ladite énergie calorifique captée par ladite au moins une réserve d'un matériau à accumulation de chaleur (8) audit au moins un deuxième bain de lavage et/ou de rinçage ; et
- évacuation dudit au moins un deuxième bain de lavage et/ou de rinçage depuis ledit réservoir (9) vers ladite cuve de lavage (3).

2. Procédé de commande en fonctionnement d'un appareil de lavage (1) selon la revendication 1, **caractérisé en ce que** ladite étape d'évacuation dudit au moins un deuxième bain de lavage et/ou de rinçage depuis ledit réservoir (9) vers ladite cuve de lavage (3) est mise en oeuvre au cours d'un cycle de fonctionnement suivant dudit appareil de lavage (1).

3. Procédé de commande en fonctionnement d'un appareil de lavage (1) selon la revendication 2, **caractérisé en ce que** ladite étape d'évacuation dudit au moins un deuxième bain de lavage et/ou de rinçage depuis ledit réservoir (9) vers ladite cuve de lavage (3) est mise en oeuvre au cours d'une phase de lavage d'un cycle de fonctionnement suivant dudit appareil de lavage (1).

4. Appareil de lavage (1) comprenant une cuve de lavage (2), un échangeur de chaleur (6), ladite cuve de lavage (2) contenant au moins un bain de lavage et/ou de rinçage utilisé lors d'un cycle de fonctionnement dudit appareil de lavage (1), ledit échangeur de chaleur (6) comprenant au moins une réserve d'un matériau à accumulation de chaleur (8) captant l'énergie calorifique d'au moins un premier bain de lavage et/ou de rinçage et restituant ladite énergie calorifique captée à au moins un deuxième bain de lavage et/ou de rinçage, **caractérisé en ce que** :
- ledit appareil de lavage (1) comprend :
o un réservoir (9) en communication fluidique avec ladite cuve de lavage (2) ;
o au moins un moyen de mise en circulation (15, 16, 17) desdits au moins un premier et deuxième bain de lavage et/ou de rinçage entre ladite cuve de lavage (3) et ledit réservoir (9),
o où ledit au moins un moyen de mise en circulation (15, 16, 17) introduit successivement lesdits au moins un premier et deuxième bain de lavage et/ou de rinçage dans ledit réservoir (9), et
o où ledit au moins un moyen de mise en circulation (15, 16, 17) évacue successivement ledit au moins un premier bain de lavage et/ou de rinçage depuis ledit réservoir (9) et ledit au moins un deuxième bain de lavage et/ou de rinçage depuis ledit réservoir ( 9) vers ladite cuve de lavage (3) ;
- ledit réservoir (9) comporte :
o ladite au moins une réserve d'un matériau à accumulation de chaleur (8),
o où lesdits au moins un premier et deuxième bain de lavage et/ou de rinçage sont stockés successivement à l'intérieur dudit réservoir (9) lors des échanges de chaleur entre lesdits au moins un premier et deuxième bain de lavage et/ou de rinçage et ladite au moins une réserve d'un matériau à accumulation de chaleur (8), et
o où ladite au moins une réserve d'un matériau à accumulation de chaleur (8) stocke l'énergie calorifique dudit au moins un premier bain de lavage et/ou de rinçage et restitue ladite énergie calorifique captée audit au moins un deuxième bain de lavage et/ou de rinçage.

5. Appareil de lavage (1) selon la revendication 4, **caractérisé en ce que** ledit au moins un moyen de mise en circulation (15, 16, 17) mettant en oeuvre une circulation d'eau entre ladite cuve de lavage (3) et ledit réservoir (9) comprend une première pompe (15) et/ou une deuxième pompe (17) et/ou au moins un moyen de déviation d'eau (16).

6. Appareil de lavage (1) selon la revendication 5, **caractérisé en ce que** ledit au moins un moyen de mise en circulation (15, 16, 17) comprend au moins ladite première pompe (15) et ledit au moins un moyen de déviation d'eau (16), et **en ce que** ladite première pompe (15) introduit successivement lesdits au moins un premier et deuxième bain de lavage et/ou de rinçage depuis ladite cuve de lavage (3) dans ledit réservoir (9).

7. Appareil de lavage (1) selon la revendication 5 ou 6, **caractérisé en ce que** ledit au moins un moyen de mise en circulation (15, 16, 17) comprend au moins ladite première pompe (15) et ledit au moins un moyen de déviation d'eau (16), et **en ce que** lesdits au moins un premier et deuxième bain de lavage et/ou de rinçage sont évacués par gravité depuis ledit réservoir (9) vers ladite cuve de lavage (3) puis par ladite première pompe (15) depuis ladite cuve de lavage (3) vers un réseau d'eau usée (19).

8. Appareil de lavage (1) selon la revendication 5 ou 6, **caractérisé en ce que** ledit au moins un moyen de mise en circulation (15, 16, 17) comprend au moins ladite deuxième pompe (17) et ledit au moins un moyen de déviation d'eau (16), et **en ce que** ladite deuxième pompe (17) évacue ledit au moins un premier bain de lavage et/ou de rinçage depuis ledit réservoir (9) vers un réseau d'eau usée (19).

9. Appareil de lavage (1) selon l'une quelconque des revendications 4 à 8, **caractérisé en ce que** ledit réservoir (9) est isolé thermiquement.

10. Appareil de lavage (1) selon l'une quelconque des revendications 4 à 9, **caractérisé en ce que** le matériau à accumulation de chaleur de ladite au moins une réserve (8) est un matériau à changement de phase.

## Claims

1. A method to control the operation of a washing machine (1), said washing machine (1) comprising a wash tub (3), a heat exchanger (6), said wash tub (3) containing at least one washing and/or rinsing bath used during an operating cycle of said washing machine (1), said heat exchanger (6) comprising at least one reserve of a heat-accumulating material (8) capturing the heat energy of at least one first washing and/or rinsing bath and returning said captured heat energy to at least one second washing and/or rinsing bath, **characterized in that** said method comprises at least the following steps:
- introducing and storing said at least one first washing and/or rinsing bath in a tank (9), where said tank (9) is in fluid communication with said wash tub (3) and comprises said at least one reserve of a heat-accumulating material (8);
- said at least one reserve of a heat-accumulating material (8) recovering the heat energy from said at least one first washing and/or rinsing bath and said at least one reserve of a heat-accumulating material (8) storing said heat energy;
- discharging said at least one washing and/or rinsing bath from said tank (9);
- introducing and storing said at least one second washing and/or rinsing bath in said tank (9);
- returning said heat energy captured by said reserve of a heat-accumulating material (8) to said at least one second washing and/or rinsing bath; and
- discharging said at least one second washing and/or rinsing bath from said tank (9) to said wash tub (3).

2. A method to control the operation of a washing machine (1) according to claim 1, **characterized in that** said step of discharging said at least one second washing and/or rinsing bath from said tank (9) to said wash tub (3) is implemented during the course of a following operating cycle of said washing machine (1).

3. A method to control the operation of a washing machine (1) according to claim 2, **characterized in that** said step of discharging said at least one second washing and/or rinsing bath from said tank (9) to said wash tub (3) is implemented during the course of a washing phase of a following operating cycle of said washing machine (1).

4. A washing machine (1) comprising a wash tub (2), a heat exchanger (6), said wash tub (2) containing at least one washing and/or rinsing bath used during an operating cycle of said washing machine (1), said heat exchanger (6) comprising at least one reserve of a heat-accumulating material (8) capturing the heat energy of at least one first washing and/or rinsing bath and returning said captured heat energy to at least one second washing and/or rinsing bath, **characterized in that**:
- said washing machine (1) comprises:
o a tank (9) in fluid communication with said wash tub (2);
o at least one means of circulating (15, 16, 17) said at least one first and second washing and/or rinsing bath between said wash tub (3) and said tank (9),
o wherein said at least one means of circulating (15, 16, 17) successively introduces said at least one first and second washing and/or rinsing bath into said tank (9), and
o wherein said at least one means of circulating (15, 16, 17) successively discharges said at least one first washing and/or rinsing bath from said tank (9) and said at least one second washing and/or rinsing bath from said tank (9) to said wash tub (3);
- said tank (9) comprises:
o said at least one reserve of a heat-accumulating material (8),
o wherein said at least one first and second washing and/or rinsing bath are successively stored inside said tank (9) during heat exchanges between said at least one first and second washing and/or rinsing bath and said at least one reserve of a heat-accumulating material (8), and
o wherein said at least one reserve of a heat-accumulating material (8) stores the heat energy of said at least one first washing and/or rinsing bath and returns said captured heat energy to said at least one second washing and/or rinsing bath.

5. A washing machine (1) according to claim 4, **characterized in that** said at least one means of circulating (15, 16, 17) implementing a water circulation between said wash tub (3) and said tank (9) comprises a first pump (15) and/or a second pump (17) and/or at least one water-diverting means (16).

6. A washing machine (1) according to claim 5, **characterized in that** said at least one means of circulating (15, 16, 17) comprises at least said first pump (15) and said at least one water-diverting means (16), and **in that** said first pump (15) successively introduces said at least one first and second washing and/or rinsing bath from said wash tub (3) into said tank (9).

7. A washing machine (1) according to claim 5 or 6, **characterized in that** said at least one means of circulating (15, 16, 17) comprises at least said first pump (15) and said at least one water-diverting means (16), and **in that** said at least one first and second washing and/or rinsing bath are discharged by gravity from said tank (9) to said wash tub (3) then by said first pump (15) from said wash tub (3) to a wastewater system (19).

8. A washing machine (1) according to claim 5 or 6, **characterized in that** said at least one means of circulating (15, 16, 17) comprises at least said second pump (17) and said at least one water-diverting means (16), and **in that** said second pump (17) discharges said at least one first washing and/or rinsing bath from said tank (9) to a wastewater system (19).

9. A washing machine (1) according to any one of the claims 4 to 8, **characterized in that** said tank (9) is thermally insulated.

10. A washing machine (1) according to any one of the claims 4 to 9, **characterized in that** the heat-accumulating material of said at least one reserve (8) is a phase-changing material.

## Patentansprüche

1. Verfahren zur Betriebssteuerung eines Waschgeräts (1), wobei das besagte Waschgerät (1) einen Laugenbehälter (3) und einen Wärmetauscher (6) umfasst, wobei der besagte Laugenbehälter (3) mindestens eine während eines Betriebszyklus des besagten Waschgeräts (1) benutzte Wasch- und/oder Spülflotte enthält, wobei der besagte Wärmetauscher (6) mindestens einen Vorrat eines Wärmespeichermaterials (8), welches die Wärmeenergie mindestens einer ersten Wasch- und/oder Spülflotte aufnimmt und die besagte aufgenommene Wärmeenergie an mindestens eine zweite Wasch- und/oder Spülflotte abgibt, umfasst, **dadurch gekennzeichnet, dass** das besagte Verfahren zumindest die folgenden Schritte umfasst:
- Einführen und Speichern der besagten mindestens ersten Wasch - und/oder Spülflotte in einem Speicher (9), wobei der besagte Speicher (9) fluidisch mit dem besagten Laugenbehälter (3) verbunden ist und den besagten mindestens einen Vorrat eines Wärmespeichermaterials (8) enthält;
- Rückgewinnen der Wärmeenergie der besagten mindestens ersten Wasch- und/oder Spülflotte durch den besagten mindestens einen Vorrat eines Wärmespeichermaterials (8), und Speichern der besagten Wärmeenergie durch den besagten mindestens einen Vorrat eines Wärmespeichermaterials (8);
- Ablassen der besagten mindestens ersten Wasch- und/oder Spülflotte aus dem besagten Speicher (9);
- Einführen und Speichern der besagten mindestens einen zweiten Wasch- und/oder Spülflotte in dem besagten Speicher (9);
- Abgeben der besagten aufgenommenen Wärmeenergie durch den besagten mindestens einen Vorrat eines Wärmespeichermaterials (8) an die besagte mindestens eine zweite Wasch- und/oder Spülflotte; und
- Ablassen der besagten mindestens einen zweiten Wasch- und/oder Spülflotte aus dem besagten Speicher (9) in den besagten Laugenbehälter (3).

2. Verfahren zur Betriebssteuerung eines Waschgeräts (1) nach Anspruch 1, **dadurch gekennzeichnet, dass** der besagte Schritt des Ablassens der besagten mindestens einen zweiten Wasch- und/oder Spülflotte aus dem besagten Speicher (9) in den besagten Laugenbehälter (3) während eines anschließenden Betriebszyklus des besagten Waschgeräts (1) durchgeführt wird.

3. Verfahren zur Betriebssteuerung eines Waschgeräts (1) nach Anspruch 2, **dadurch gekennzeichnet, dass** der besagte Schritt des Ablassens der besagten mindestens einen zweiten Wasch- und/oder Spülflotte aus dem besagten Speicher (9) in den besagten Laugenbehälter (3) während einer Waschphase eines anschließenden Betriebszyklus des besagten Waschgeräts (1) durchgeführt wird.

4. Waschgerät (1) mit einem Laugenbehälter (2) und einem Wärmetauscher (6), wobei der besagte Laugenbehälter (2) mindestens eine während eines Betriebszyklus des besagten Waschgeräts (1) benutzte Wasch- und/oder Spülflotte enthält, wobei der besagte Wärmetauscher (6) mindestens einen Vorrat eines Wärmespeichermaterials (8), welches die Wärmeenergie mindestens einer ersten Wasch- und/oder Spülflotte aufnimmt und die besagte aufgenommene Wärmeenergie an mindestens eine zweite Wasch- und/oder Spülflotte abgibt, umfasst, **dadurch gekennzeichnet, dass**:
- das besagte Waschgerät(1) umfasst:
o Einen Speicher (9), welcher fluidisch mit dem besagten Laugenbehälter (2) verbunden ist;
o mindestens eine Vorrichtung (15, 16, 17) zur Zirkulation der besagten mindestens einen ersten und der besagten mindestens einen zweiten Wasch- und/oder Spülflotte zwischen dem besagten Laugenbehälter (3) und dem besagten Speicher (9),
o wobei die besagte mindestens eine Zirkulationsvorrichtung (15, 16, 17) die besagte mindestens eine erste und die besagte mindestens eine zweite Wasch- und/oder Spülflotte nacheinander in den besagten Speicher (9) einführt, und
o wobei die besagte mindestens eine Zirkulationsvorrichtung (15, 16, 17) nacheinander die besagte mindestens eine erste Wasch - und/oder Spülflotte aus dem besagten Speicher (9) und die besagte mindestens eine zweite Wasch- und/oder Spülflotte aus dem besagten Speicher (9) in den besagten Laugenbehälter (3) abführt;
- der besagte Speicher (9) umfasst:
o Den besagten mindestens einen Vorrat eines Wärmespeichermaterials (8),
o wobei die besagte mindestens eine erste und die besagte mindestens eine zweite Wasch- und/oder Spülflotte während des Wärmeaustauschs zwischen der besagten mindestens einen ersten und der besagten mindestens einen zweiten Wasch - und/oder Spülflotte und dem besagten mindestens einen Vorrat eines Wärmespeichermaterials (8) nacheinander im Inneren des besagten Speichers (9) gespeichert werden, und
o wobei der besagte mindestens eine Vorrat eines Wärmespeichermaterials (8) die Wärmeenergie der besagten mindestens einen ersten Wasch- und/oder Spülflotte speichert und die besagte aufgenommene Wärmeenergie an die besagte mindestens eine zweite Wasch- und/oder Spülflotte abgibt.

5. Waschgerät (1) nach Anspruch 4, **dadurch gekennzeichnet, dass** die besagte mindestens eine Zirkulationsvorrichtung (15, 16, 17), welche eine Wasserzirkulation zwischen dem besagten Laugenbehälter (3) und dem besagten Speicher (9) gewährleistet, eine erste Pumpe (15) und/oder eine zweite Pumpe (17) und/oder mindestens eine Wasserumleitungsvorrichtung (16) umfasst.

6. Waschgerät (1) nach Anspruch 5, **dadurch gekennzeichnet, dass** die besagte mindestens eine Zirkulationsvorrichtung (15, 16, 17) mindestens die besagte erste Pumpe (15) und die besagte mindestens eine Wasserumleitungsvorrichtung (16) umfasst, und dass die besagte erste Pumpe (15) die besagte mindestens eine erste und die besagte mindestens eine zweite Wasch- und/oder Spülflotte nacheinander von dem besagten Laugenbehälter (3) in den besagten Speicher (9) einführt.

7. Waschgerät (1) nach Anspruch 5 oder 6, **dadurch gekennzeichnet, dass** die besagte mindestens eine Zirkulationsvorrichtung (15, 16, 17) mindestens die besagte erste Pumpe (15) und die besagte mindestens eine Wasserumleitungsvorrichtung (16) umfasst, und dass die besagte mindestens eine erste und die besagte mindestens eine zweite Wasch- und/oder Spülflotte durch Schwerkraft von dem besagten Speicher (9) an den besagten Laugenbehälter (3) und anschließend durch die besagte erste Pumpe (15) von dem besagten Laugenbehälter (3) in ein Abwassernetz (19) abgeführt werden.

8. Waschgerät (1) nach Anspruch 5 oder 6, **dadurch gekennzeichnet, dass** die besagte mindestens eine Zirkulationsvorrichtung (15, 16, 17) mindestens die besagte zweite Pumpe (17) und die besagte mindestens eine Wasserumleitungsvorrichtung (16) umfasst, und dass die besagte zweite Pumpe (17) die besagte mindestens eine erste Wasch- und/oder Spülflotte von dem besagten Speicher (9) an ein Abwassernetz (19) abführt.

9. Waschgerät (1) nach einem beliebigen der Ansprüche 4 bis 8, **dadurch gekennzeichnet, dass** der besagte Speicher (9) thermisch isoliert ist.

10. Waschgerät (1) nach einem beliebigen der Ansprüche 4 bis 9, **dadurch gekennzeichnet, dass** das Wärmespeichermaterial des besagten mindestens einen Vorrats (8) ein Phasenveränderungsmaterial ist.
